(19) Europäisches Patentamt
European Patent Office
Office européen des brevets

(11) **EP 2 001 694 B1**

(12) **EUROPEAN PATENT SPECIFICATION**

(45) Date of publication and mention
of the grant of the patent:
**20.04.2011 Bulletin 2011/16**

(51) Int Cl.:
***B60J 5/06*** *(2006.01)*

(21) Application number: **07734119.6**

(22) Date of filing: **28.03.2007**

(86) International application number:
**PCT/IB2007/000794**

(87) International publication number:
**WO 2007/110762 (04.10.2007 Gazette 2007/40)**

(54) **REINFORCEMENT MATERIAL AND ROOF STABILISATION SYSTEM TO PREVENT DEFORMATION OF CHARGERS, TRAILERS AND/OR LORRIES**

VERSTÄRKUNGSMATERIAL UND DACHSTABILISIERUNGSSYSTEM ZUR VERHINDERUNG DER VERFORMUNG VON BESCHICKERN, ANHÄNGERN UND/ODER LASTWAGEN

MATERIAU DE RENFORT ET SYSTEME DE STABILISATION DE TOIT QUI PERMET D'EVITER TOUTE DEFORMATION DE VEHICULES DE CHARGEMENT, REMORQUES ET/OU CAMIONS

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **28.03.2006 BE 200600194**
**11.10.2006 BE 200600505**

(43) Date of publication of application:
**17.12.2008 Bulletin 2008/51**

(73) Proprietor: **Dynatex S.A.**
**7700 Moeskroen (BE)**

(72) Inventor: **CALLENS, Christophe**
**B-1640 Sint-genesius-rode (BE)**

(74) Representative: **Brants, Johan P.E.**
**Brantsandpatents**
**Guldensporenpark 75**
**9820 Merelbeke (BE)**

(56) References cited:
**WO-A-89/00934      WO-A-03/045779**
**US-A- 3 961 585      US-A- 5 831 766**
**US-B1- 6 537 649**

## Description

### Technical field

The present invention is related to reinforcement materials, and more specifically to reinforced tarpaulin materials for the prevention of deformations during transport with freight trucks.

### Background of the invention

Roof constructions comprising a flexible tarpaulin are commonly known for freight trucks as described in e.g. US 3961585.

A disadvantage with the use of such tarpaulins is their low rigidity as a result of which during transport undesirable deformations of the freight trucks may take place.

DE 197 56 865 and EP 1 387 775 describe roof constructions wherein such a roof construction is additionally reinforced with several ropes or cables spanning the roof construction to enhance the rigidity. A disadvantage of these ropes or cables is that they are operated independently of the tarpaulin, for example when opening and closing the roof constructions.

The present invention aims at offering a solution for above cited disadvantages and has the object of providing a reinforced tarpaulin construction with a sufficiently high rigidity. The solution to the problems posed is given in claim 1.

### Summary

In a first aspect, the invention concerns a tarpaulin comprising a flexible carrier provided with a tarpaulin reinforcement means of at least a bi-axial layout of layers of mutually parallel extending reinforcement elements, wherein the reinforcement elements are provided at an angle different from 0° and 90° with regard to the longitudinal direction of the tarpaulin. The direction in which the reinforcement elements extend in a layer is determined by an angle, herein called bias direction. A layout has the advantage that the individual reinforcement elements extend in a straight line from one edge to the other edge without considerable deformations, which enhances the rigidity.

Preferably, each layer of reinforcement elements extends in its mutually equal but opposite bias direction. Hence, preferably a first layer of reinforcement elements extends in a bias direction $\alpha$ and the bias direction of the other layer is -$\alpha$. Preferably, $\alpha$ is an angle between 35° and 75° with respect to the longitudinal direction of the tarpaulin. This bias direction is chosen such that the reinforcement elements in a first layer connect the far left ends of a first crossbeam with the far right ends of a next crossbeam, and vice versa for the reinforcement elements in the second layer. The reinforcement elements of the second layer connect the far right ends of a first crossbeam with the far left ends of a next crossbeam. The first and the next crossbeams do not need to be adjacent. Between the first and the next crossbeams, there may be 0, 1, 2, 3, 4, 5, 6 crossbeams.

Another embodiment of the current invention comprises a tarpaulin reinforcement means comprising an adhering sheet as flexible carrier on which a bi-axial layout is provided. The adhering sheet consists wholly or partly of a thermoplastic material, preferably PVC, and is suitable to be attached to a tarpaulin, preferably by gluing, sticking or thermal welding.

Preferably, the flexible carrier comprises an adhering sheet, a multi-axial layout, fabric, non-woven, network or a combination thereof, and more preferably a fabric, for example a polyester mesh, coated or dipped in a thermoplastic material, for example PVC or PE.

For example, a layout may comprise two layers stacked on top of each other, wherein the reinforcement threads extend in a layer in a first bias direction, and the reinforcement threads extend in another layer in a second bias direction, and wherein the second bias direction differs from the first bias direction. Preferably, the reinforcement threads of one layer extend at an angle between 20° and 80°, preferably between 35° and 75°, and the reinforcement threads of the other layer extend at an angle between -20° and -80°, preferably between -35° and -75°, with respect to the longitudinal direction of the tarpaulin. More preferably, the first and second bias directions are symmetrically opposite, i.e. if the first bias direction forms an angle X° with the longitudinal direction (wherein X ranges between 0° and 90°, but is not 0° and 90°), then the second bias direction forms an angle - X° with the longitudinal direction. Such a tarpaulin reinforcement means, when in use, may be attached to a tarpaulin, upon which the tarpaulin is attached to the roof construction of a freight truck, trailer and/or truck in anchoring points.

In another embodiment according to the invention, preferably, the layout consists of at least three individual layers of reinforcement threads, wherein the layers of reinforcement threads are stacked upon each other. Preferably, the reinforcement threads are provided in one layer in the same direction. More preferably, the reinforcement threads are provided in at least two bias directions and in one longitudinal direction. Hence, in said embodiment the layout comprises a third layer of reinforcement elements at an angle equal to 0°. Such a tarpaulin reinforcement means, when in use, is attached to a tarpaulin upon which the tarpaulin is attached to the roof construction of a freight truck, trailer and/or truck in anchoring points.

The tarpaulin reinforcement means according to the invention is attached to all possible anchoring points (attachment points) provided in the roof construction of the vehicle. Therefore, the attachment is carried out on all possible attachment points, which may reduce or even prevent a possible deformation of the horizontal crossbeams.

The rigidity of the roof construction is also enhanced by the increase of the density of the reinforcement elements in a layer of the layout, as a result of which for each connection with an anchoring point, a multitude of reinforcement elements is attached. Preferably, in a layer of the layout, in which the reinforcement threads within the layer extend mutually parallel (preferably in a bias direction) the average density of the reinforcement elements may be at least 0.25 reinforcement elements per inch (2.54 cm), preferably at least 0.5 reinforcement elements per inch, more preferably at least 1 reinforcement element per inch, for example 1.5 reinforcement elements per inch, even more preferably at least 2 reinforcement elements per inch, for example 2.5 reinforcement elements per inch, and even more preferably at least 3 reinforcement elements per inch, for example at least 3.5, at least 4, at least 5, at least 6, at least 7, at least 8, at least 9, at least 10, at least 15 or at least 20 reinforcement elements per inch, wherein the density is measured in the longitudinal direction of the tarpaulin.

This high density of the reinforcement threads within the tarpaulin reinforcement means ensures that when attaching and anchoring the tarpaulin reinforcement means, or a tarpaulin provided with such tarpaulin reinforcement means, on the roof construction of the vehicle, each anchoring point will grip at least one and preferably several (for example 2, 3, 4, 5, 6, 7, 8, 9, 10 or more) reinforcement elements.

In a further embodiment, connection threads are provided around the layers of reinforcement elements, for example sewed together with a sewing thread. This impedes the freedom of movement of the reinforcement threads within the tarpaulin reinforcement means, as a result of which the homogeneity and durability of the tarpaulin reinforcement means is improved. Therefore, in one embodiment, the layers are at least partly mutually attached to each other. In a further embodiment this attachment (for example by sewing) may involve also one or more other components of the tarpaulin, for example a flexible carrier, *etc.*

The invention provides a tarpaulin suitable to be attached to a roof construction of a freight truck, trailer or truck near anchoring points provided in the roof construction. The tarpaulin comprises a tarpaulin reinforced with a tarpaulin reinforcement means as defined herein. The tarpaulin comprises a flexible carrier provided with a tarpaulin reinforcement means as described hereinabove.

In one example, the tarpaulin comprises a flexible carrier provided with a tarpaulin reinforcement means with a multi-axial (at least bi-axial) layout of layers of mutually parallel extending reinforcement elements wherein the reinforcement elements extend at an angle different from 0° and 90°.

The present invention is further related to a tarpaulin which serves as a stabilizer and which may at least partly prevent deformation of freight trucks, trailers and/or trucks. To this end, the tarpaulin is provided with reinforcement threads, the reinforcement threads being provided at least in the bias direction, i.e. at an angle different from 90°, and/or in the longitudinal direction, i.e. at an angle of 0°.

The term "bias" refers to a direction which runs diagonally through the material, and preferably in a direction at an angle different from 90° with respect to the longitudinal or lateral direction of the material. In the present invention, this angle may be comprised between 1 and 89°, and amounts to for example 10, 20, 30, 40, 50, 60, 70 or 80°.

The terms "reinforcement threads" or "reinforcement elements" are used herein as synonyms.

The term "flexible carrier" refers to a flexible layer or layers of material such as usually used for tarpaulins. For example, a flexible carrier may be a layer of woven (plastic) fabric or a layer of extruded plastic (for example a film or cloth) or a composite of one or more layers of woven (plastic) fabric and/or one or more layers of extruded plastic optionally manufactured with a coating on one or both sides.

The invention provides a tarpaulin, wherein the reinforcement T threads are provided at an angle which differs from 90°, and preferably at an angle smaller than 90°, and more preferably at an angle which is equal to, for example, 85°, 80°, 75°, 70°, 65°, 60°, 55°, 50°, 45°, 40°, 35°, 30°, 25°, 20°, 15° or 10°. In another preferred embodiment the invention provides a tarpaulin, wherein the reinforcement threads are provided at an angle of 0°.

The invention provides a tarpaulin, wherein the reinforcement threads are provided in at least two different bias directions. In a further preferred embodiment the invention provides a tarpaulin, wherein the reinforcement threads are provided in at least three, and for example in at least four or at least five different bias directions. In another embodiment the invention provides a tarpaulin, wherein the reinforcement threads are provided in at least four directions, preferably in bias directions and longitudinal directions.

Preferably, the tarpaulin reinforcement means, as described above, is at least partly attached to the flexible carrier. This improves the stability and homogeneity of the tarpaulin in use. Attaching the tarpaulin reinforcement means to the flexible carrier may be performed by means of chemical and/or mechanical attachment means, for example by means of gluing, sticking, welding, sewing, laminating between other layers, *etc.*

For example, in one embodiment of the tarpaulin, the tarpaulin reinforcement means is sewed onto the flexible carrier. Preferably, the resulting product may be provided with a coating on one or both sides to cover the sewing holes.

In another embodiment the tarpaulin is provided with a second flexible carrier, wherein the tarpaulin reinforcement means is enclosed between the two flexible carriers, such as for example, in a laminate. The two flexible carriers may be attached to each other by means of chemically and/or mechanical attachment means, for example by means of gluing, sticking, welding, sewing, *etc*.

In one embodiment the carriers comprise a mutually meltable material, preferably a mutually meltable thermoplastic material, such as for example PVC or PE, such that attaching the carriers to each other may be performed by using heat and/or pressure.

In one embodiment the second flexible carrier may be an open carrier, for example a net, more in particular a woven open net. The use of an open carrier, for example a net, may limit the weight of the tarpaulin, such as the quantity of material needed to manufacture the tarpaulin.

In one embodiment the exterior and/or the interior of the tarpaulin may be coated. Preferably, the coating on the exterior of the tarpaulin may be impermeable. Preferably, this coating may be UV-durable. This coating may have several colors, for example white, yellow, etc. Preferably, the coating on the interior of the tarpaulin may be impermeable. This coating may have several colors or preferably, may be transparent to allow to pass as much light as possible through the roof construction inside the freight truck, and to leave visible as much as possible the reinforcement elements for assembling on the anchoring points. For example, a coating may be a thin layer (for example a film) of extruded plastic, for example of a thermoplastic material, preferably PVC.

In one preferred embodiment the invention provides a tarpaulin, wherein the reinforcement threads are provided at an angle different from 90° and preferably at an angle smaller than 90°, and example equal to 85°, 80°, 75°, 70°, 65°, 60°, 55°, 50°, 45°, 40°, 35°, 30°, 25°, 20°, 15°, 10°, 5°. Preferably, this angle "$\alpha$" will be equal to the ratio of the gauge with respect to the horizontal distance and still more preferably to a multiple thereof.

$$1/Tg\ \alpha = \frac{\text{the gauge horizontal joints}}{\text{distance connection to horizontal joints)}}$$

In another embodiment the invention provides a tarpaulin, wherein the additional reinforcement threads are provided at an angle of 0°.

In a further embodiment the invention provides a tarpaulin, wherein the reinforcement threads are threads which consist at least partly or wholly of steel.

The reinforcement threads used may also comprise fibers from aramide and more preferably from para-aramide, or glass fiber threads, carbon fibers and/or steel cables. Particularly preferred is a layout in which (para)-aramide fibers are combined with steel cables, in order not only to obtain a more rigid tarpaulin and tarpaulin reinforcement means, but also to obtain a tarpaulin and tarpaulin reinforcement means resistant against cutting or carving and thus serving as an anti-vandalism material.

Preferably, the invention provides a tarpaulin wherein the reinforcement threads show a elongation at break smaller than 10 %, and for example smaller than 8 %, 7 %, 6 %, 5 %, 4 % or 3 %. In a further embodiment the invention provides a tarpaulin, wherein the reinforcement threads are steel wires of 0,22 mm, 0,25 mm or 0,35 mm. The reinforcement threads may be optionally mixed with other threads, and/or strings, twisted yarns, cables, and/or multifilaments.

Preferably, the present tarpaulin is an upper tarpaulin (or top tarpaulin), i.e. a tarpaulin suitable to cover the top of a freight truck, trailer or truck or the like. However, the present tarpaulin may also comprise a tarpaulin suitable to cover the sidewall(s) of a freight truck, trailer or truck.

In a further embodiment the invention provides the use of a tarpaulin according to the invention as a stabilizer against the deformation of freight trucks, trailers and/or trucks.

In another embodiment the invention provides the use of a tarpaulin according to the invention as a reinforcement means and/or anti-vandalism material.

In order to better show the features of the invention, hereafter, by way of example and without any limiting purpose, some preferred embodiments are described.

**Description of the figures**

**FIG. 1** represents a bottom view of a roof construction of a truck as known from the prior art provided with a tarpaulin. The roof construction is provided with separate reinforcement threads which connect the attachment points at two opposite sides of the construction with each other in two bias directions.

**FIGS. 2 up to 5** illustrate bottom views of roof constructions of trucks which are covered with several embodiments of tarpaulins according to the present invention.

**FIG. 6** illustrates a crossbeam or rooftop on which reinforcement threads, and hence a tarpaulin reinforcement means according to the invention can be attached.

**FIG. 7** illustrates an embodiment of the tarpaulin according to the invention ; 7A - cross section of the tarpaulin ; 7B - bottom view of the tarpaulin.

**FIG. 8** illustrates an embodiment of the tarpaulin according to the invention ; 8A - cross section of the tarpaulin ; 8B - bottom view of the tarpaulin.

**FIG. 9** illustrates an embodiment of the tarpaulin according to the invention ; 9A - cross section of the tarpaulin ; 9B - bottom view of the tarpaulin.

## Detailed description

As a result of the fact that the bi-axial threads connect the two crossbeams of the frame directly or indirectly to each other and preferably also to the front and the back of the frame, the forces are better absorbed and dispersed. The current material wherein, for example, an angle of 60° and -60° of the bias threads with regard to the longitudinal direction is provided, will already suffices to at least partly prevent deformation problems.

In order to satisfy to the desired properties, such as being as flexible as possible, being as light-weighted as possible, preferably not rusting, strength, and high resistance against elongation, certain materials will be preferred.

For example, mono-steel wires of e.g. 0.22 mm in diameter with 6 wires per inch in both directions (bias-) may already suffices. It goes without saying that also materials other than steel may be used in pure or in mixed form. In order to prevent possible corrosion, for example (galvanized) steel wires may be replaced by inox steel wires. These reinforcement threads may also be replaced wholly or partly, optionally as a mixture, by aramide wires, preferably para-aramide wires, carbon fibers or wires, glass or Rockwool such as basalt, INOX, PEEK, PEK and others in all possible combinations in yarn composition, continuous or stretched wires, mixtures in yarn shape, in twists or cables, twines, etc. and all possible textile shapes such as bands, braids, fabrics, knittings, layouts, non-wovens, etc.

Preferably, the elongation at break will be as small as possible, and preferably less than 10 % and still more preferably less than 4 %, otherwise the threads need to be overdimensioned to have sufficient resistance against elongation at a given load. A construction with longitudinal threads will also aid in this, especially since these threads connect the front of the frame to the back panel and especially if the elongation of these threads is not more than the elongation of the cross bars. Most preferably (para-) aramide filaments are used with an elongation at break of about 3.5 % and with a tensile strength of about 350 N.

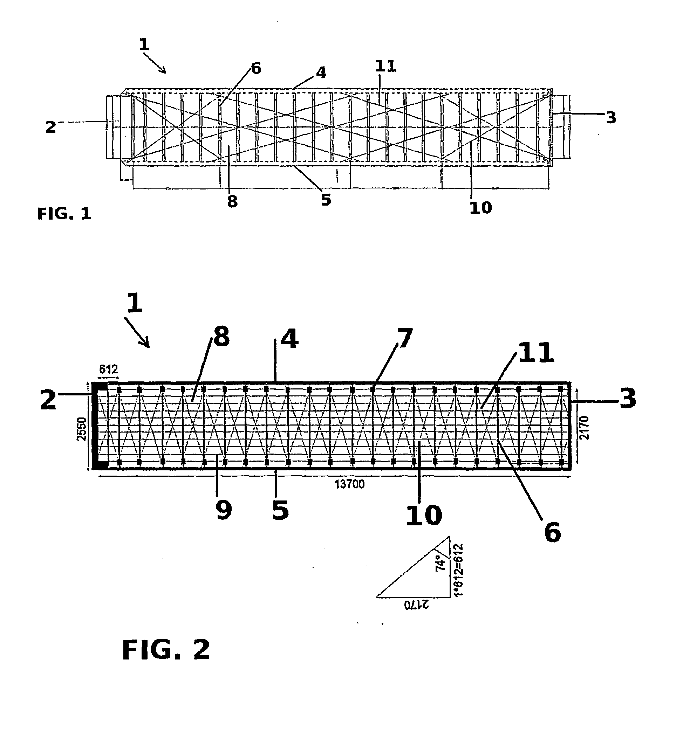

A construction as depicted in **FIGS. 2-5** has only reinforcements in bias-form in the construction or composite in the sense that the attachment points on the horizontal joints of the crossbeams or on the crossbeams themselves are diagonally (in bias) connected with each other. The (textile) product may also have only threads in these connection areas, but may also have a regular construction. These connection threads may also be applied in tape form, optionally embedded in PVC or PE or any other material.

The reinforcement construction may also only consist of a longitudinal reinforcement (angle 0° or preferably less than 45°).

A still more preferred construction will consist of a material with a bias reinforcement, different from 0° and/or 90°, and with a longitudinal reinforcement of preferably 0°. These longitudinal threads will connect the front plate and the rear plate or front and rear rail of a vehicle directly or indirectly to each other and also contribute against the deformation of the trailer and/or vehicle.

**FIGS. 2-5** illustrate roof constructions **1** for freight trucks, trailers or trucks. The roof constructions comprise a rectangular frame (frame), consisting of two short sides **2, 3** (also called top beams or front and rear rail), and two sides which extend in the longitudinal direction **4, 5** (also called upper beams or longitudinal rails). The sides **4, 5** which extend in the longitudinal direction are mutually connected by means of crossbeams or roof bows **6,** the crossbeams being provided with anchoring points **7** for anchoring a tarpaulin **8** to the roof construction. As explained above, the tarpaulin **8** comprises a tarpaulin reinforcement means comprising a layout of reinforcement threads **9, 10, 11.** These reinforcement threads are provided in three directions : reinforcement threads 9 are provided in the longitudinal direction, and reinforcement threads **10, 11** are provided in two bias directions. The reinforcement threads **9, 10, 11** connect all possible anchoring points **7** provided on the roof bows **6.**

For comparison, reinforcement threads **10, 11** provided for tarpaulins **8** known from the prior art, as illustrated in **FIG. 1,** are provided in two (bias) directions, but not in the longitudinal direction, and do not connect all possible anchoring points.

The reinforcement threads **10, 11** connect those anchoring points **7** in two opposite sides **4, 5** of the constructions. As is apparent from the figures, the reinforcement threads are suitable to be anchored in the anchoring points **7** of the roof construction : herewith the reinforcement threads connect one anchoring point on one side of the roof construction with one anchoring point on an opposite side of the roof construction. The said connected anchoring points are not directly opposite to each other on the same crossbeam, but diagonally (bias) with respect to each other on several crossbeams, as is depicted in **FIGS. 2-5.**

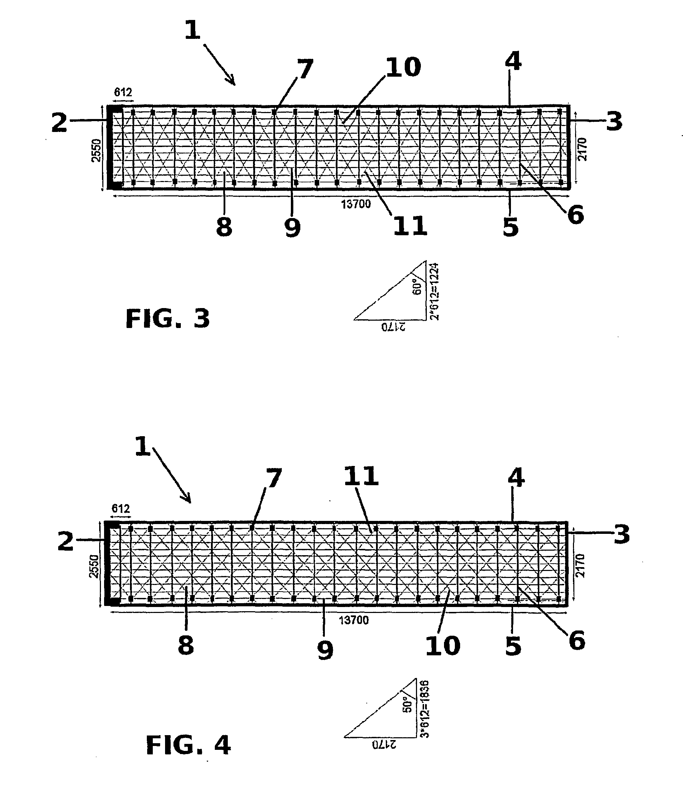

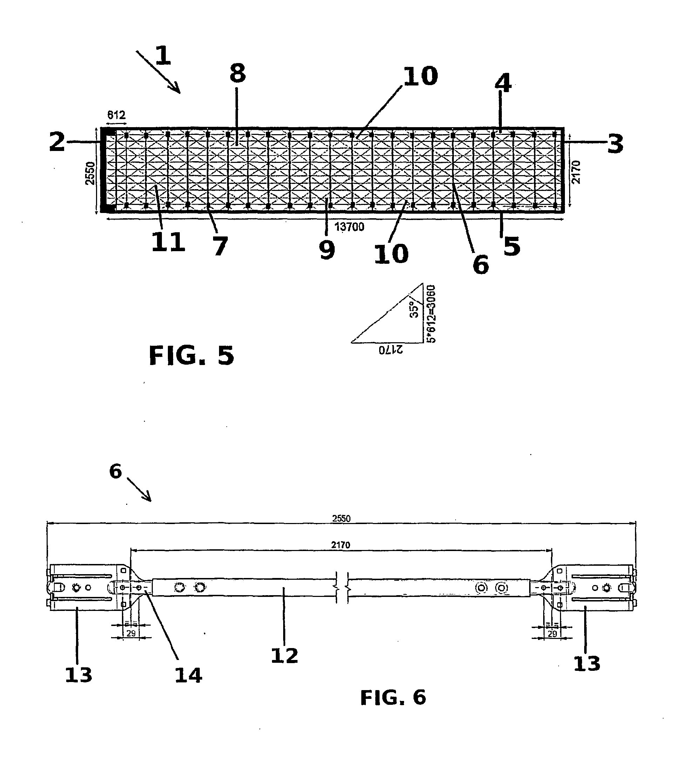

Hence, an anchoring point provided on a crossbeam may be connected with the anchoring point provided on the next, adjacent crossbeam, as represented in **FIG. 2**. In **FIG. 3** an anchoring point provided on a crossbeam is connected to the anchoring point provided on the second next crossbeam. Hence, one crossbeam is located between the connected anchoring points. In **FIG. 4** an anchoring point provided on a crossbeam is connected with the anchoring point provided on the third next crossbeam. Hence, two crossbeams are located between the connected anchoring points. In **FIG. 5** an anchoring point provided on a crossbeam is connected with the anchoring point provided on the fifth next crossbeam. Hence, four crossbeams are located between the connected anchoring points.

The reinforcement threads are provided in the bias direction. According to the invention the angles at which these bias directions run (with respect to the longitudinal beams **4, 5** and therefore the longitudinal direction of the roof construction) are, among others, determined by the position of the anchoring points **7** in the roof construction, by the dimensions of the roof construction, the distance between crossbeams (gauge) and by the desired connection between the anchoring points. With reference to **FIGS. 2 - 5,** for a (roof) construction with a horizontal connection distance of 2170 mm and a gauge (distance between two crossbeams) of 612 mm, the bias angle may be calculated as: $\alpha = 74°15'$ **(FIG. 2:** for a connection with the first next crossbeam); $\beta = 60°35'$ **(FIG. 3** for a connection with the second next crossbeam), $\delta = 49°22'$ **(FIG. 4:** for connection with the third next crossbeam); $\gamma = 36°04'$ **(FIG. 5:** for connection with the fifth next crossbeam).

Therefore, in one embodiment the invention provides also the use of a tarpaulin as described herein, as a roof covering for a vehicle, wherein the vehicle is provided with multiple roof bows **6,** and wherein one (or several) bias directions is (are) determined as parallel to the connection line between the anchoring point **7** on one roof bow **6** and the diagonally opposite anchoring point **7** on another (for example a next or a further, for example a second next, third next, fourth next, or fifth next, *etc.*) roof bow **6**. Therefore, the two anchoring points **7** connected by the connection line are located at opposed sides **4** or **5** of the roof construction. Preferably, such a connection line is drawn when the respective roof bows **6** are in a closed roof configuration.

**FIG. 6** illustrates a roof bow **6** to which the reinforcement threads of a tarpaulin reinforcement means or a tarpaulin according to the invention are attached. Such a roof bow is usually provided with a crossbeam **12** provided at its end with hands **13**. The hands **13** are attached to the crossbeam **12** near the plate **7** serving as an anchoring point. Preferably, the reinforcement threads of a tarpaulin reinforcement means or a tarpaulin according to the invention are attached to plate **14,** for example by means of screws.

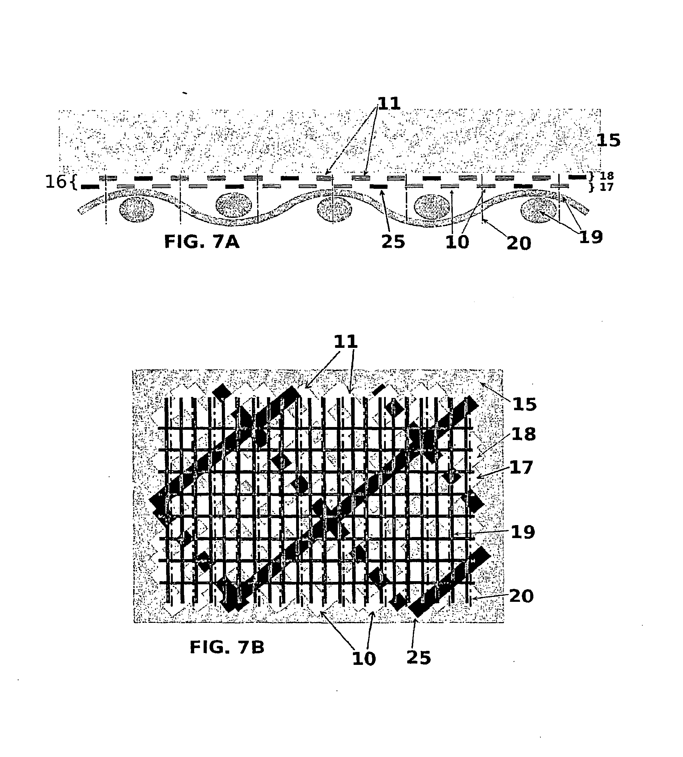

Further preferred embodiments of tarpaulins according to the invention are described based on FIGS. 7-9.

The tarpaulin in FIG. 7 comprises a flexible carrier **15** forming the exterior of the tarpaulin and, at the interior of the flexible carrier **15,** a layout **16** of at least two (herein two) individual, layers **17, 18** of reinforcement threads or reinforcement filaments **10, 11,** placed on top of each other, wherein the reinforcement threads within a layer **17** or **18** run mutually parallel while the reinforcement threads between the different layers **17** and **18** are provided in several directions, preferably in opposite bias directions. Furthermore, the tarpaulin in FIG. 7 is provided with a woven open net **19** attached to the flexible carrier **15,** such that the layout **16** located between the flexible carrier **15** and the net **19** is attached to the flexible carrier **15**. Preferably, the flexible carrier **15** and/or the net **19** (preferably at least the net **19 ;** also preferably both the flexible carrier **15** and the net **19)** comprise a thermoplastic polymer, such that the net **19** by means of heat and/or pressure is attached to the flexible carrier **15.**

The production of the tarpaulin in FIG. 7 may comprise the following steps : 1) a first layer **17** of reinforcement threads **10** is positioned in a first direction, preferably in a first bias direction ; 2) a second layer **18** of reinforcement threads **11** is positioned on the first layer **17** in a second direction, preferably in a second opposite bias direction ; 3) the layout **16** obtained in steps 1) and 2) is positioned between the flexible carrier **15** and the woven open net **19 ;** 4) the flexible carrier **15,** the layout **16** and the net **19** are integrated into a laminate, as the net **19** is attached to the flexible carrier **15,** for example by means of gluing, heat and/or pressure, or ultrasonically. Preferably, the reinforcement threads **10** of a first layer **17** are positioned at an angle between 0° and 90°, and different from 0° and 90°, with respect to the longitudinal direction of the tarpaulin material, and the reinforcement threads **11** of a second layer **18** are positioned at an angle between 0° and -90°, and different from 0° and -90°, with respect to the longitudinal direction of the tarpaulin material. Also preferably, the net **19** may be first positioned and attached, preferably sewed with a sewing thread **20,** to the layout **16,** before these are connected with the flexible carrier **15**. This reduces the freedom of movement of the reinforcement threads **10, 11** in the laminate and ensures a better homogeneity and durability of the tarpaulin. Because of this, also the manipulation and homogeneity of the layout **16** are improved during production of the tarpaulin. A particular, but not limiting example of the tarpaulin according to FIG. 7 and production thereof has been described in detail in Example 7.

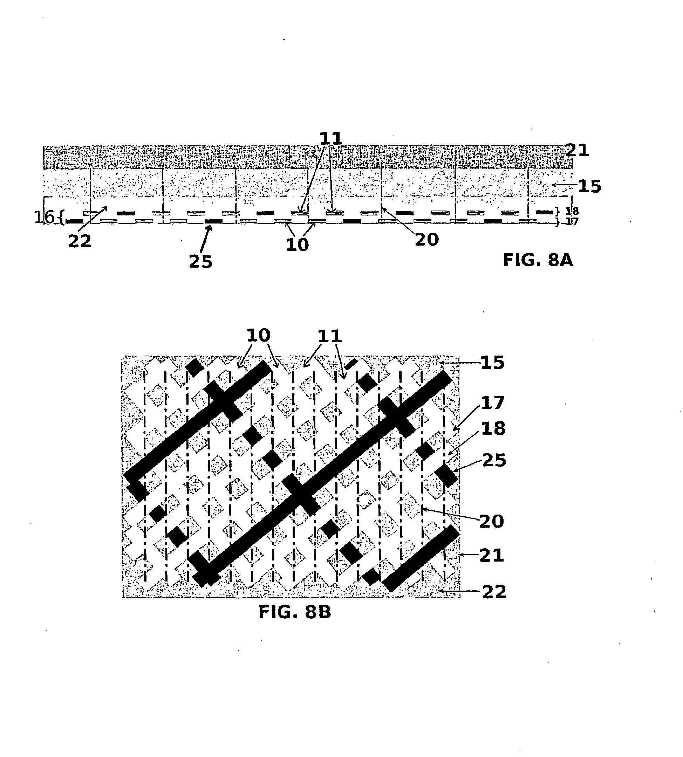

The tarpaulin in FIG. 8 comprises a flexible carrier **15** forming the exterior of the tarpaulin, wherein the exterior surface of the flexible carrier **15** is provided with a coating **21** (preferably, the coating **21** is impermeable, and also preferably resistant to UV-radiation). At the interior of the flexible carrier **15** a layout **16** of at least two (herein two) individual layers **17, 18** of reinforcement threads **10, 11** is located, positioned onto each other, wherein the reinforcement threads within a layer **17** or **18** run mutually parallel, whereas reinforcement threads between the different layers **17** and **18** are provided in different directions, preferably in opposite bias directions. Furthermore, the tarpaulin in FIG. 8 is provided with an additional coating **22** (preferably, the coating **22** is impermeable) on the interior of the layout **16.** In one embodiment, the coating **22** may be chosen (for example, a thermoplastic polymer) such that it may stick to the flexible carrier **15,** as a result of which also the layout **16** is attached to the flexible carrier **15.** On the other hand, the layout **16** may be sewed to the flexible carrier **15** with sewing thread **20,** reducing the freedom of movement of the reinforcement threads **10, 11** in the laminate and ensuring a better homogeneity and durability of the tarpaulin.

The production of the tarpaulin in FIG. 8 may comprise the following steps : 1) a first layer **17** of reinforcement threads **10** is positioned in a first direction, preferably in a first bias direction ; 2) a second layer **18** of reinforcement threads **11** is positioned on the first layer **17** in a second direction, preferably in a second opposite bias direction ; 3) the flexible carrier **15** (optionally pre-coated with a thermoplastic material) is positioned on the layout **16** produced in steps 1) and 2) and the flexible carrier **15** and the layout **16** are sewed together with sewing thread **20 ;** 4) subsequently, the coatings **21** and **22** are applied to respectively the exterior of the flexible carrier **15** and to the interior of the layout **16.** Preferably, the reinforcement threads **10** of the first layer **17** are positioned at an angle between 0° and 90°, and different from 0° and 90°, with respect to the longitudinal direction of the tarpaulin material, and the reinforcement threads **11** of the second layer **18** are positioned at an angle between 0° and -90°, and different from 0° and -90°, with respect to the longitudinal direction of the tarpaulin material. A particular, but not limiting example of the tarpaulin according to FIG. 8 and production thereof has been described in detail in Example 8.

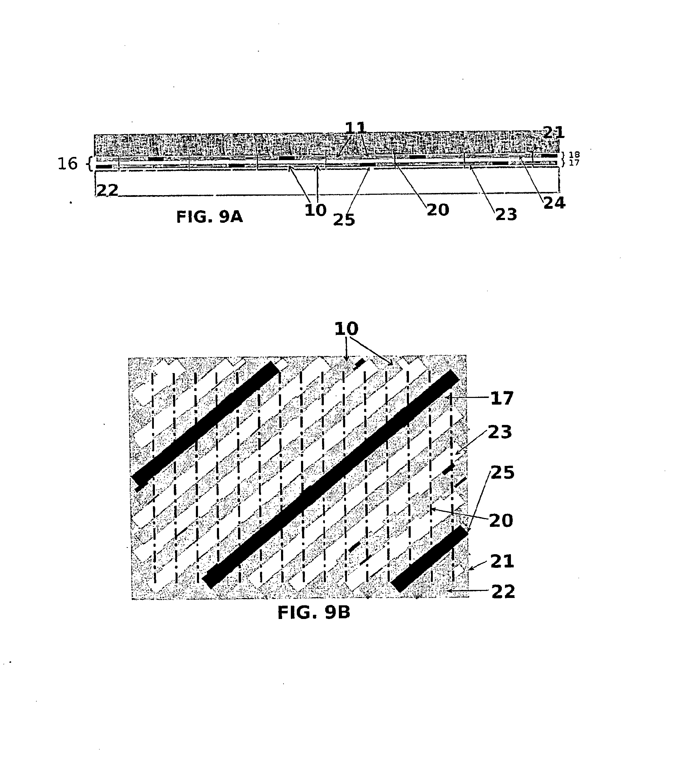

The tarpaulin in FIG. 9 comprises a layout **16** of at least two (herein two) individual layers **17, 18** of reinforcement threads **10, 11,** positioned on each other, wherein the reinforcement threads within a layer **17** or **18** run mutually parallel, while the reinforcement threads between the different layers **17** and **18** are provided in several directions, preferably in opposite bias directions ; the layers **17** and/or **18,** preferably **17** and **18,** also comprise fibers **23, 24** of an optionally high tensile strength, which may replace the function of the flexible carrier **15.** Preferably, these fibers **23, 24** may be positioned parallel to the reinforcement threads **10** and **11** of the respective layers **17** and **18.** The reinforcement threads **10, 11** and the fibers **23, 24** of the layout **16** are sewed together with a sewing thread **20.** The exterior of the layout **16** is provided with a coating **21** (preferably, the coating **21** is impermeable, and also preferably resistant to UV-radiation). The interior of the layout **16** is provided with a coating **22** (preferably, the coating **22** is impermeable).

The production of the tarpaulin in FIG. 9 may comprise the following steps : 1) the first layer **17** of reinforcement threads **10** and fibers **23** is positioned in a first direction, preferably in a first bias direction ; 2) the second layer **18** of reinforcement threads **11** and fibers **24** is positioned on the first layer **17** in a second direction, preferably in a second opposite bias direction ; 3) the layers **17** and **18** are sewed together with sewing thread **20 ;** 4) the coatings **21** and **22** are applied respectively to the exterior and interior of the layout **16** produced in steps 1) to 3). Preferably, the reinforcement threads **10** and fibers **23** of the first layer **17** are positioned at an angle between 0° and 90°, and different from 0° and 90°, with respect to the longitudinal direction of the tarpaulin material, and the reinforcement threads **11** and fibers **24** of the second layer **18** are positioned at an angle between 0° and -90°, and different from 0° and -90°, with respect to the longitudinal direction of the tarpaulin material. A particular, but not limiting example of the tarpaulin according to FIG. 9 and production thereof has been described in detail in Example 9.

**Examples**

The following examples illustrate some constructions of tarpaulins or tarpaulin reinforcement materials according to the invention. The constructions to use may be the same as the anti-vandalism tarpaulin such as, for example :

| **Example A:** | Chain: | 0° | No |
| | Bias | +/-60° | 6 wires per inch 0.22 mm steel |
| | Weft | 90° | 6 wires per inch 0.22 mm steel |
| | 2 layers non-woven | | PETP 70 gr/m$^2$ |
| | + binding | threads | PETP |
| | Coating | | PVC |

or

| Example B: | Chain | 0° | 1.167 wires per 25 mm 0.35 mm steel |
|---|---|---|---|
| | Bias | +/-60° | 6 wires per inch 0.22 mm steel |
| | Weft | 90° | 6 wires per inch 0.22 mm steel |
| | 3 layers | non-woven | PETP 70 gr/m$^2$ |
| | + binding | threads | PETP |
| | Coating | | PVC |

or may be made especially for this purpose :

| Example C: | Chain | 0° | No |
|---|---|---|---|
| | Bias | +/-60° | 6 wires per inch 0.22 mm steel |
| | | | Width 2 inch |
| | | | Next, 2 wires per inch 0.22 mm steel |
| | | | Repetitive 2 inch - 4 inches, etc... |
| | Weft | 90° | No |
| | Non-woven | | Optionally 0 or 1 or 2 layers |
| | Coating | | PVC |
| Example D: | Chain | 0° | 3 wires per 25 mm 0.35 mm steel |
| | Bias | 54° | alternating: |
| | | | 6 wires per inch 0.22 mm steel |
| | | | On 2 inch wide strip(s) |
| | | | Next, 2 wires per inch 0.22 mm steel |
| | | | On 4 inch wide strip(s) |
| | Weft | 90° | 2 wires per inch 0.22 mm steel |
| | Coating | | PVC |

Other preferred embodiments of reinforcement constructions comprise :

Example 1: A multi-axial reinforcement

1.1 in bias 60°35' ($\pm$ 1°); 6 threads of aramide 1680 dtex spread out over 2 inches and 0 threads in 4 inches (together 6 inches). A regular repetition thereof.

1.2 in longitudinal direction 0° - 1 threads of aramide 1680 dtex per 4.28 cm

1.3 knitting yarn: 167 dtex PES FTF.

Example 2: A multi-axial reinforcement

2.1 in bias: 49° 22 ($\pm$ 1°); 6600 dtex glass roving 6 threads/inch; regularly spread out over the entire fabric

2.2 in longitudinal direction -1 thread per 4.28 cm in 6600 dtex glass roving.

Example 3. A glass layout

3.1. in bias 36° 04 ($\pm$1°); 13200 dtex glass - 3 threads per inch

3.2. in longitudinal direction (0°) - 1 thread 6600 dtex glass per 4.28 cm

3.3. attachment product: PVC with reception 25 %.

Example 4. A multi-axial reinforcement for roof and anti-vandalism

4.1 in bias direction angle 60° 35 ($\pm$1°); (4 threads of 1680 dtex aramide and 2 threads 3 x 3 x 0.15 mm coated steel cable): spread out over 2" and 0 threads (together 6"); regular repetition.

4.2 in longitudinal direction; 1 thread 1680 dtex aramide per 8.56 cm and 1 thread coated steel 3 x 3 x 0.15 mm

4.3 knitting yarn: 235 dtex polyamide HT.

Example 5. A multi-axial reinforcement for roof and anti-vandalism

5.1 in bias direction: inox 0.25 mm: 6 wires per inch = 12 wires on 2" and 0 wires on 4" (together 6"); regular repetition

5.2 in longitudinal direction: a wire 0.35 mm inox per 4.28 cm

Example 6. A multi-axial roof reinforcement

6.1 in bias direction: glass yarn 660 dtex + anti-abrasion coating e.g. PVC; 6 threads per inch angle 49° 22 ($\pm$1°)

6.2 in longitudinal direction: glass roving 6600 dtex + anti-abrasion coating, e.g. PVC; 1 thread per 2.14 cm

It goes without saying that an infinite number of variations is possible with parameters such as type of wire, density, angles, materials, weights, types of coatings, etc.. The reinforcement threads may also be replaced and/or mixed with ropes, twines, cables, tapes, multi-filaments, etc.

Example 7. A tarpaulin according to FIG. 7

The different elements of the tarpaulin in FIG. 7 comprise the following materials - flexible carrier **15** : woven PET fabric comprising PET fibers (twisted or flat) of 1100 dtex, coated on both sides with PVC ; reinforcement threads **10, 11** : aramide fibers (twisted or flat) of 1680 dtex ; net **19 :** woven open PET net comprising PET fibers (twisted or flat) of 1100 dtex coated on both sides with PVC ; sewing thread **20** : PET fibers of 167 dtex.

The production is as follows:

1) the first layer **17** of aramide fibers **10** is positioned mutually parallel with a density of 3 fibers per inch (2.54 cm) and at an angle of -52° with respect to the longitudinal direction ; preferably after each 15 aramide fibers, a black PET fiber **25** (1100 dtex, twisted or flat) is inserted as a marker;

2) the second layer **18** of aramide fibers **10** is positioned onto the first layer **17**, mutually parallel with a density of 3 fibers per inch and at an angle of +52° with respect to the longitudinal direction ; preferably after each 15 aramide fibers a black PET fiber **25** (1100 dtex, twisted or flat) is inserted as a marker;

3) the coated PET net **19** is placed onto the layout **16** produced in steps 1) and 2) and the first layer **17**, second layer **18** and the net **19** are sewed together with the PET sewing thread **20**;

4) the product of step 3) is positioned onto the flexible carrier **15** such that the aramide layers **17**, **18** are located between the net **19** and the flexible carrier **15** and the laminate is welded together by heat and pressure, as a result of which the PVC in the coatings of the net **19** and the flexible carrier **15** melts and is glued together.

Example 8. A tarpaulin according to FIG. 8

The different elements of the tarpaulin in FIG. 8 comprise the following materials - flexible carrier **15 :** woven PET fabric comprising PET fibers (twisted or flat) of 1100 dtex, coated on the top side with PVC; reinforcement threads **10**, **11**: aramide fibers (twisted or flat) of 1680 dtex ; sewing thread **20 :** PET fibers of 167 dtex ; coating **21 :** UV-durable PVC coating (for example white or yellow); coating **22 :** transparent PVC coating.

The production is as follows:

1) the first layer **17** of aramide fibers **10** is positioned mutually parallel with a density of 3 fibers per inch and at an angle of -50° with respect to the longitudinal direction ; preferably after each 15 aramide fibers, a black PET fiber **25** (1100 dtex, twisted or flat) is inserted as a marker;

2) the second layer **18** of aramide fibers **10** is positioned onto the first layer **17,** mutually parallel with a density of 3 fibers per inch and at an angle of +50° with respect to the longitudinal direction ; preferably after each 15 aramide fibers, a black PET fiber **25** (1100 dtex, twisted or flat) is inserted as a marker;

3) the flexible carrier **15** is positioned with the uncoated side on the layout **16** produced in steps 1) and 2) and the layout **16** and flexible carrier **15** are sewed together with the PET sewing thread **20**;

4) the coating **21** is applied to the product of step 3) to the side of the flexible carrier **15** and the coating **22** is applied to the product of step 3) to the side of the layout **16.**

An advantage of the use of an already coated PET as flexible carrier **15** is the fact that the PET fibers may shrink notably during the application of a first coating. Hence, this prevents some shortening of the PET fibers during the coating process in step 4) and prevents the deformation of the construction of the tarpaulin reinforcement means of the tarpaulin.

Example 9. A tarpaulin according to FIG. 9

The different elements of the tarpaulin in FIG. 9 comprise the following materials - fibers **23, 24 :** PET fibers of an optionally high tensile strength (twisted or flat) of 1100 dtex and a very low shrinkage (less than 2 %) ; reinforcement threads **10**, **11 :** aramide fibers (twisted or flat) of 1680 dtex; sewing thread **20 :** PET fibers of 167 dtex ; coating **21 :** UV-durable PVC coating (for example white or yellow ; coating **22 :** transparent PVC coating.

The production is as follows:

1) the first layer **17** of aramide fibers **10** and PET fibers **23** is positioned at an angle of - 60° with respect to the longitudinal direction, mutually parallel with a density of 3 aramide fibers per inch and 9 PET fibers per inch, wherein the aramide fibers are evenly distributed between the PET fibers ; preferably after each 35 fibers, a black PET fiber **25** (1100 dtex, twisted or flat) is inserted as a marker;

2) the second layer **18** of aramide fibers **11** and PET fibers **24** is positioned at an angle of +60° with respect to the longitudinal direction, mutually parallel with a density of 3 aramide fibers per inch and 9 PET fibers per inch, wherein the aramide fibers are evenly distributed between the PET fibers ; preferably after each 35 fibers, a black PET fiber **25** (1100 dtex, twisted or flat) is inserted as a marker;

3) the layers **17** and **18** of the layout **16** produced in steps 1) and 2) are sewed together with the PET sewing thread **20,** resulting in a dense fabric;

4) the coating **21** is applied on a side of the fabric of step 3), therefore serving as the exterior of the tarpaulin, and the coating **22** is applied on the other side of the fabric of step 3) therefore serving as the interior of the tarpaulin.

Although the black PET marker fibers of a layer **17, 18** are completely covered by the fibers of the other layer **17**, **18**, the markers and the intersection thereof can be examined against the light.

**Claims**

**1.**    A tarpaulin (8) adapted to stabilize against the deformation of a freight truck, trailer or truck,

said tarpaulin being adapted for attachment to a roof construction of said freight truck, trailer or truck, said roof construction comprising a rectangular frame consisting of two short sides (2, 3) and two sides which extend in the longitudinal direction (4, 5) that are mutually connected by means of roof bows (6), and wherein said roof bows (6) are provided with anchoring points (7) for anchoring said tarpaulin to said roof construction,

said tarpaulin (8) comprising a flexible carrier (15) provided with a tarpaulin reinforcement means comprising an at least bi-axial layout (16) of layers (17, 18) of mutually parallel extending reinforcement elements (10, 11), wherein the reinforcement elements extend at an angle different from 0° and 90°,

wherein the layers (17, 18) of reinforcement elements are provided in at least two bias directions,

wherein a bias direction is determined as parallel to the connection line between the anchoring point (7) on one roof bow (6) and the diagonally opposed anchoring point (7) on a next roof bow (6), and

wherein said reinforcement elements (10, 11) are adapted to be attached to said anchoring points (7).

2. A tarpaulin according to claim 1, wherein the layers (17, 18) of reinforcement elements are provided in two mutually opposite bias directions, preferably on the one hand at an angle between 35° and 75°, and on the other hand between -35° and -75°.

3. A tarpaulin according to claims 1 or 2, wherein the reinforcement elements (9, 10, 11) within each layer of the layout (16) has an average density of at least 0.25 reinforcement elements per 2.54 cm (inch), preferably at least 2 reinforcement elements per 2.54 cm (inch), more preferably at least 3 reinforcement elements per 2.54 cm (inch), wherein the density is measured in the longitudinal direction of the tarpaulin (8).

4. A tarpaulin according to any one of the claims 1-3, wherein the layers (17, 18) are at least partly mutually attached.

5. A tarpaulin according to any one of the claims 1-4, provided with a second flexible carrier, wherein the tarpaulin reinforcement means is enclosed between the two flexible carriers.

6. A tarpaulin according to claim 5, wherein the second flexible carrier is an open carrier, for example a net (19).

7. A tarpaulin according to any one of the claims 1-6, provided with a third layer of reinforcement elements (9) at an angle equal to 0°.

8. A tarpaulin according to any one of the claims 1-7, wherein the reinforcement elements (9, 10, 11) are permanently attached to the carrier(s) (15, 19) by means of a chemical and/or mechanical attachment means.

9. A tarpaulin according to any one of the claims 1-8, wherein the carrier(s) (15, 19) comprise(s) a mutually meltable material.

10. A tarpaulin according to any one of the preceding claims 1-9, wherein the exterior and/or interior of the carrier(s) (15, 19) are provided with a coating (21, 22).

11. A tarpaulin according to any one of the preceding claims 1-10, wherein the reinforcement elements (9, 10, 11) show an elongation at break of less than 10 %, and preferably less than 4 %.

12. A tarpaulin according to any one of the preceding claims 1-11, wherein the reinforcement elements (9, 10, 11) are (para-)aramide threads.

13. A tarpaulin according to claim 1, wherein on each anchoring point (7) at least 3 reinforcement elements (9, 10, 11) are clenched.

**Patentansprüche**

1. Fahrzeugplane (8) angepasst wie ein Stabilisator gegen die Verformung von Fracht-Lastkraftwagen, Anhängern und/oder Lastkraftwagen,

wobei sagte Fahrzeugplane angepasst ist zur Befestigung an einer Dachkonstruktion von sagte Fracht-Lastkraftwagen, Anhänger und/oder Lastkraftwagen, wobei sagte Dachkonstruktion besteht aus einem rechteckigen Rahmen, bestehend aus zwei kurzen Seiten (2, 3) und zwei Seiten, die sich in Längsrichtung erstrecken (4, 5), die gemeinsam durch Dachspriegeln (6) verbunden sind, und wobei sagte Dachspriegeln (6) mit Verankerungspunkten (7) vorgesehen sind zur Verankerung sagte Fahrzeugplane,
wobei sagte Fahrzeugplane (8) einen flexiblen Trägerstoff (15) umfasst, der mit einem Fahrzeugplanen-Verstärkungsmittel vorgesehen ist, das eine mindestens zweiaxiale Anordnung (16) von Schichten (17, 18) von sich zueinander parallel erstreckenden Verstärkungselementen (10, 11) umfasst, wobei sich die Verstärkungselemente unter einem von 0° und 90° unterschiedlichen Winkel erstrecken,
wobei die Schichten (17, 18) von Verstärkungselementen (10, 11) in mindestens zwei schrägen Richtungen vorgesehen sind,
wobei eine schräge Richtung als parallel zu der Verbindungslinie zwischen einem Verankerungspunkt (7) auf einem Dachspriegel (6) und dem diagonal gegenüberliegenden Verankerungspunkt (7) auf einem nächsten Dachspriegel (6) bestimmt ist, und
wobei sagte Verstärkungselementen (10, 11) angepasst sind zur Befestigung an sagte Verankerungspunkten (7).

2. Fahrzeugplane nach Anspruch 1, wobei die Schichten (17, 18) der Verstärkungselemente in zwei zueinander entgegengesetzten schrägen Richtungen, vorzugsweise einerseits unter einem Winkel zwischen 35° und 75° und andererseits zwischen -35° und -75°, vorgesehen sind.

3. Fahrzeugplane nach Anspruch 1 oder 2, wobei die Verstärkungselemente (9, 10, 11) innerhalb jeder Schicht der Anordnung (16) eine durchschnittliche Dichte von mindestens 0,25 Verstärkungselementen pro 2,54 cm (Inch), vorzugsweise mindestens 2 Verstärkungselementen pro 2,54 cm (Inch), besonders bevorzugt mindestens 3 Verstärkungselementen pro 2,54 cm (Inch) aufweisen, wobei die Dichte in der Längsrichtung der Fahrzeugplane (8) gemessen ist.

4. Fahrzeugplane nach einem der Ansprüche 1 bis 3, wobei die Schichten (17, 18) mindestens teilweise aneinander befestigt sind.

5. Fahrzeugplane nach einem der Ansprüche 1 bis 4, die mit einem zweiten flexiblen Trägerstoff vorgesehen ist, wobei das Fahrzeugplanen-Verstärkungsmittel zwischen den zwei flexiblen Trägerstoffen eingeschlossen ist.

6. Fahrzeugplane nach Anspruch 5, wobei der zweite flexible Trägerstoff ein offener Trägerstoff, beispielsweise ein Netz (19), ist.

7. Fahrzeugplane nach einem der Ansprüche 1 bis 6, die mit einer dritten Schicht von Verstärkungselementen (9) unter einem Winkel, der gleich 0° ist, vorgesehen ist.

8. Fahrzeugplane nach einem der Ansprüche 1 bis 7, wobei die Verstärkungselemente (9, 10, 11) dauerhaft an dem (den) Trägerstoff(en) (15, 19) durch chemische und/oder mechanische Befestigungsmittel befestigt sind.

9. Fahrzeugplane nach einem der Ansprüche 1 bis 8, wobei der (die) Trägerstoff(en) (15, 19) ein gegenseitig verschmelzbares Material umfasst (umfassen).

10. Fahrzeugplane nach einem der vorhergehenden Ansprüche 1 bis 9, wobei die Außenseite und/oder Innenseite von dem (den) Trägerstoff(en) (15, 19) mit einer Beschichtung (21, 22) vorgesehen sind.

11. Fahrzeugplane nach einem der vorhergehenden Ansprüche 1 bis 10, wobei die Verstärkungselemente (9, 10, 11) eine Bruchdehnung von weniger als 10 % und vorzugsweise weniger als 4 % zeigen.

12. Fahrzeugplane nach einem der vorhergehenden Ansprüche 1 bis 11, wobei die Verstärkungselemente (9, 10, 11) (para-) Aramidfäden sind.

13. Fahrzeugplane nach Anspruch 1, wobei auf jedem Verankerungspunkt (7) mindestens 3 Verstärkungselemente (9, 10, 11) vernietet sind.

**Revendications**

1. Une bâche (8) adaptée pour stabiliser contre la déformation d'une semi-remorque, remorque ou camion de fret, la dite bâche étant adaptée pour la fixation à une construction de toit du dit camion de fret, semi-remorque ou remorque, la dite construction de toit comportant un cadre rectangulaire se composant de deux côtés courts (2, 3) et deux côtés qui se prolongent dans la direction longitudinale (4, 5) qui sont mutuellement reliés au moyen d'arceaux de toit (6), et où les dits arceaux de toits (6) sont munis de points de fixation (7) pour ancrer la dite bâche à la dite construction de toit,

la dite bâche (8) comprenant un support souple (15) muni d'un dispositif de renforcement de bâche comprenant au moins une disposition bi-axiale (16) de couches (17, 18) d'éléments de renforcement s'étendant d'une façon mutuellement parallèle (10, 11), dans laquelle les éléments de renforcement s'étendent sous un angle différent de 0° et 90°,

dans laquelle les couches (17, 18) d'éléments de renforcement sont disposées dans au moins deux directions de polarisation,

dans laquelle une direction opposée est déterminée en tant que parallèle à la ligne qui relie le point de fixation (7) sur un arceau de toit (6) avec le point de fixation diagonalement opposé (7) sur un prochain arceau de toit (6), et dans laquelle les dits éléments de renforcement (10, 11) sont adaptés pour être fixés aux dits points de fixation (7).

2. Une bâche selon la revendication 1, dans laquelle les couches (17, 18) d'éléments de renforcement sont disposées dans deux directions de polarisation mutuellement opposées, de préférence d'une part sous un angle entre 35° et 75°, et d'autre part entre -35° et -75°.

3. Une bâche selon les revendications 1 ou 2, dans laquelle les éléments de renforcement (9, 10, 11) au sein de chaque couche de la disposition (16) ont une densité moyenne d'au moins 0.25 éléments de renforcement par 2.54 cm (pouce), de préférence au moins 2 éléments de renforcement par 2.54 cm (pouce), mieux au moins 3 éléments de renforcement par 2.54 cm (pouce), où la densité est mesurée dans la direction longitudinale de la bâche (8).

4. Une bâche selon une quelconque des revendications 1-3, dans laquelle les couches (17, 18) sont au moins partiellement mutuellement attachées.

5. Une bâche selon une quelconque des revendications 1-4, muni d'un second support souple, dans laquelle le dispositif de renforcement de bâche est enfermé entre les deux supports souples.

6. Une bâche selon la revendication 5, dans laquelle le second support souple est un support avec des trous, par exemple une grille (19).

7. Une bâche selon une quelconque des revendications 1-6, muni d'une troisième couche d'éléments de renforcement (9) sous un angle égal à 0°.

8. Une bâche selon une quelconque des revendications 1-7, dans laquelle les éléments de renforcement (9, 10, 11) sont attachés de façon permanente au(x) support(s) (15, 19) avec un moyen de fixation chimique et/ou mécanique.

9. Une bâche selon une quelconque des revendications 1-8, dans laquelle le(s) support(s) (15, 19) comporte(nt) une matière mutuellement fusible.

10. Une bâche selon une quelconque des revendications précédentes 1-9, dans laquelle l'extérieur et/ou l'intérieur du (des) support(s) (15, 19) sont munis d'un revêtement (21, 22).

11. Une bâche selon une quelconque des revendications précédentes 1-10, dans laquelle les éléments de renforcement (9, 10, 11) ont un allongement à la rupture de moins de 10 %, et de préférence inférieur à 4 %.

12. Une bâche selon une quelconque des revendications précédentes 1-11, dans laquelle les éléments de renforcement (9, 10, 11) sont des fils de (para-)aramide.

13. Une bâche selon la revendication 1, dans laquelle à chaque point de fixation (7) au moins 3 éléments de renforcement (9, 10, 11) sont fixés.

FIG. 1

FIG. 2

**FIG. 3**

**FIG. 4**

**FIG. 5**

**FIG. 6**

11

15

16{ }18
} 17

**FIG. 7A**    25    10    20    19

11

15

18

17

19

20

**FIG. 7B**    10    25

**FIG. 8A**

**FIG. 8B**

**FIG. 9A**

**FIG. 9B**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3961585 A
- DE 19756865
- EP 1387775 A